# EUROPEAN PATENT APPLICATION

(11) **EP 4 040 183 A1**
(43) Date of publication of application: **10.08.2022**
(21) Application number: 21382100.2
(22) Date of filing: 09.02.2021
(51) Int. Cl.: G01S 7/40, G01S 7/41, G01S 13/90, G01R 29/00

(54) **AN ARRANGEMENT AND A METHOD FOR MEASURING A RADAR CROSS SECTION**

(71) Applicant: Airbus Defence and Space GmbH, 82024 Taufkirchen (DE); Airbus Defence and Space SAU, 28906 Getafe (ES)
(72) Inventor: ÁLVAREZ GONZÁLEZ, Jesús, 28906 Getafe (ES); MEYER, Andreas, 82024 Taufkirchen (DE); BRINGMANN, Dirk, 82024 Taufkirchen (DE); RITTER, Jan, 82024 Taufkirchen (DE)
(74) Representative: Frenkel, Matthias Alexander

(57) **Abstract**

A method for measuring a Radar Cross Section, RCS, of an object (200), wherein the method comprises: acquiring (S1000), by a first antenna (100), observations of the object (200) by performing two dimensional near field frequency scans; computing (S1100), by a processor, the downrange profiles of the acquired observations; computing (S1200), by the processor, the three dimensional Inverse Synthetic Aperture Radar, ISAR, images by superimposing the downrange profiles; extracting (S1300), by the processor, the scattering center of the object (200); and computing (S1400), by the processor, the RCS of the object (200).

## Description

### Field of the invention

The present invention relates to an arrangement and a methodology for measuring the Radar Cross Section (RCS) of targets/objects located on the ground. The measurement arrangement enables to filter out all the effects produced by the ground plane. The methodology enables to minimize the impact of the main sources of distortion inherent in the measurement arrangement.

### Background to the invention

The RCS of air vehicles can be measured in-flight, however this results in expensive campaigns which do not offer accurate values. Indoor chambers, commonly referred as to anechoic chambers, do not present limitations due to ground interference. However, the investment and maintaining costs of a chamber to measure large objects, such as a real-size aircraft, are extremely high.

Compact-range configurations, typically used in indoor facilities, can also be realized outdoors. The limitations of such arrangements are: the ground effect has to be mitigated, for example applying the patterning concept, and the target must be located on a pylon.

For other outdoor ranges, the main problem is the reflection from the ground surface. Traditional techniques for its mitigation are based on either reducing its effect via reflecting or absorbing fences to shield the signal path directed to the ground bounce region. Further techniques also comprise of minimizing the illumination of the ground by shaping the antenna pattern, or exploiting the ground bounce by adjusting heights of target and/or antennas in function of illumination frequency to combine with the direct signal in a constructive manner.

These are not very practical solutions, and in many cases the target must be located on a pylon. This requirement is the main disadvantage due to the complexity of this operation for large targets.

Concerning the azimuth scanning of the target, it can be performed by rotating the target, typically using a turntable. The main disadvantage is the required accuracy in the rotation which is difficult to fulfil with heavy targets.

Finally, the target needs to be illuminated in free-space and far-field conditions, which could be achieved by a compact range configuration already referred above, or by measuring from long distances. In the case of a target of a physical size of -20 m, the distance must be in the order of tens of kilometers for X-band frequencies, introducing dramatic restrictions for the location of the facility.

There is therefore a need for an improved technique for determining the RCS of an object in an outdoor facility. Preferably, the technique mitigates the effects of the ground effect. Preferably, the technique can be easily used to measure the RCS of large objects, has a simple setup, and/or can allow for high-quality radar imaging.

### Summary of the invention

The invention is set out in the independent claims. Preferred embodiments of the invention are outlined in the dependent claims.

The main advantage of the invention is that it offers the possibility to measure the RCS of heavy and large targets with reduced, e.g. minimum, effort and cost. It also has a simple setup, not requiring any special preparation or modification of the object, since it can be located on the ground and not on a pylon.

The invention may also offer high-quality radar imaging, leading to a more detailed analysis of frequency dependence and the influence of single contributors. The invention may be modular and easy to transport and deploy in different locations for performing RCS measurements.

According to a first aspect, a method for measuring a Radar Cross Section (RCS) of an object is described. The method comprises acquiring, by an antenna, observations of the object by performing two dimensional near field frequency scans. The method further comprises computing, by a processor, the downrange profiles of the acquired observations. The method further comprises computing, by the processor, the three dimensional Inverse Synthetic Aperture Radar (ISAR) images by superimposing the downrange profiles. The method further comprises extracting, by the processor, the scattering centers of the object. The method further comprises computing, by the processor, the RCS of the object.

The method as a whole may enable the distortion produced by the antenna or antennas to be corrected. Furthermore, the methodology may allow for the mechanical deviation of the system to be corrected for during the scanning process. Additionally, the methodology may allow for the distortion introduced by the hardware gating to be corrected. Besides, the methodology may allow for filtering out the effects produced by the ground plane or any other reflective surface interacting with the object.

The first antenna may be one single antenna which is used for both transmitting and receiving, an antenna pair, wherein one antenna is used for transmitting and a second antenna is used for receiving, or an antenna array, wherein each antenna element can be selected for transmitting and/or receiving. Alternatively, instead of the first antenna, there may be an antenna pair or an antenna array. In some examples, an antenna array is used and an antenna pair within the antenna array is selected, wherein one antenna of the antenna pair is used for transmitting and a second antenna of the antenna pair is used for receiving.

The acquisition of the observations of the object by performing two dimensional near field frequency scans may allow for a detailed observation of the object. The two dimensional frequency scans may be undertaken by, preferably, an antenna pair or alternatively, an antenna, which may be displaced along the scanning surface. Alternatively, one dimension of the two dimensional near field frequency scans or both dimensions of the two dimensional near field frequency scans may be undertaken by switching between several antenna elements part of an antenna array. In the case of one dimension being scanned, the scanning of the other dimension may be undertaken by displacing the antenna array and then scanning the second dimension. This may avoid and/or reduce the displacement of the acquisition system and may reduce the acquisition time of the system. The results of the acquisition may be output to a processor located in the same location as the antenna. Alternatively, the processor may be located in a remote location. The results may be transferred to the processor via a wired connection and/or a wireless connection. In some embodiments, there may be multiple acquisitions of observations at a number of different locations.

The computation of the downrange profiles of the observations may allow for the processor to convert the observations into a format suitable for the subsequent steps of the method. This may also allow for abnormal observations to be repeated if there was a fault with the acquisition of the observations or if, for example, an animal flew between the antenna and the object during the acquisition. Additionally or alternatively, this may also allow for these abnormal observations to be corrected via, for example, equalization or any other suitable method, or partially or completely discarded. The threshold for deciding when an observation is abnormal may be predetermined by the processor and/or memory and/or may dynamically change based on the object being observed. This step of the method may also allow for the method to undertake the near-to-far field conversion technique. In some examples, the computation of the downrange profiles takes pace only after all the observations of the object have been acquired.

The computation of the three dimensional ISAR images may allow for the processor to build a high quality computerized radar image of the object. This may also allow for a user that views these images to understand the scattering phenomena taking place in the object, but also to identify abnormal observations, unexpected/undesirable couplings in the acquisition system or systematic errors. These abnormal observations may be compensated by acting on the downrange profiles which in turn, may lead to an improved radar image.

The extraction of the scattering centers of the object may allow for a user to corroborate the extracted scattering centers with the expected scattering centers. If the computed and expected scattering centers are greatly different, the user may instruct the processor to redo the method. The expected scattering centers may be used to guide the extraction of the scattering center method. This may result in an improved output of the RCS measurement. This extraction may also be used in the future by the user to redesign the object in order to change the scattering centers to more advantageous scattering centers depending on what the object is. In some examples, only one scattering center of the object is extracted from the observations.

The computation of the RCS of the object may allow for a user to see what the object would look like on, for example, a RADAR screen. The contribution to the RCS of a part, area, zone or specific feature of the object may be evaluated by computing the RCS with only the related scattering centers. The user may then use these results to alter the design, locally or globally, of the object in order to reduce the RCS and/or change the RCS distribution.

In some embodiments, after acquiring the observations of the object, the observations are calibrated by the processor. The calibration may be done by preset parameters. This calibration may reduce the errors within the subsequent computations and lead to a high quality radar image and an accurate ISAR and RCS of the object. In some embodiments, the calibration process takes place before the acquisition of the observations.

In some embodiments, the calibration uses an echo received from a calibration target, TC, located on a known position on a first axis between the object and a carrier where the method takes place, and wherein the TC is displaced in a lateral direction along a second axis in relation to the object, avoiding shadowing of the object by the TC, wherein the first axis and the second axis are orthogonal to each other. The RCS of the TC may be known before the measurement of the RCS of the object. This may allow for an accurate calibration of the RCS measurement and lead to more accurate RCS results.

In the downrange profiles, the distance from the TC to the first antenna can be estimated for each observation. This may allow for an estimation of mechanical deviations produced during the movement of the carrier in the axis orthogonal to the two dimensional scanning path performed by the carrier or in any other direction of interest to be calculated and for these deviations to be corrected in the method. The orthogonality of the first and second axes allows for a more accurate estimation of the distance between the TC and the first antenna. Alternatively, the TC may be located on a position of the first axis which is not between the object and the carrier and displaced in a lateral direction along the second axis in relation to the object, wherein the second axis is orthogonal to the first axis. The first axis may be parallel to an imaginary axis, wherein the imaginary axis is a straight line directly connecting the object and the carrier. This in turn may mean that the TC is not directly between the object and the carrier. In some examples, the first axis is not parallel to the imaginary axis. Alternatively, the second axis may not be orthogonal to the first axis but merely not parallel to the first axis. This may result in a trilateration method of determining the distance between the TC and the first antenna. This may also result in improved measurements and therefore, higher quality radar imaging and a more accurate RCS measurement. There may be more than one TC. This in turn may improve the accuracy of the estimation of mechanical deviations.

In some embodiments, after computing the downrange profiles, the distortion of the downrange profiles are corrected by the processor, wherein the correction comprises correcting the distortion from the antenna pattern and/or the transient of a hardware gating equipment, HGE, and/or mechanical deviations. This may result in fewer abnormalities and less noise within the subsequent computations. This in turn may lead to a more focused and a higher quality ISAR image and an improved RCS result.

In some embodiments, after the extraction of the scattering centers of the object, the effects of the ground plane are filtered out by the processor. This may result in fewer abnormalities and less noise within the RCS computation thereby leading to a more accurate result.

In some embodiments, the downrange profiles are computed by using a Fast Fourier Transform, FFT. This may allow for a more efficient processor as FFT is a particularly efficient method of calculation. It may also allow for a faster method thereby increasing the speed of the obtainment of the ISAR images and the RCS results retrieved from the observations, including all the corrections.

In some embodiments, the scattering centers of the object are extracted by a CLEAN algorithm. The use of the CLEAN algorithm may allow for a more efficient processor due to the characteristics of the algorithm by, for example, parallelization. It may also allow for a more accurate extrapolation of the results and more accurate RCS results in the limits of the equivalent scanning ranges in azimuth and elevation angles. In the application of the CLEAN, the point spread function may be computed exactly as the ISAR image has been computed, considering that the same number of downrange profiles are acquired from the same positions, same antennas, same mechanical deviations, and so on. This may result in better convergence of the CLEAN algorithm. This may also result in a more accurate RCS measurement.

According to a second aspect, we describe an arrangement for measuring a Radar Cross Section (RCS) of an object. The arrangement comprises a first antenna configured to acquire observations of the object by performing two dimensional near field frequency scans. The arrangement further comprises a processing unit comprising a processor, wherein the processor is configured to compute downrange profiles of the acquired observations, compute a three dimensional Inverse Synthetic Aperture Radar (ISAR) image by superimposing the downrange profiles, extract scattering centers of the object and compute the RCS of the object. In some embodiments, only one scattering center of the object is extracted. The first antenna may be one single antenna which is used for both transmitting and receiving, an antenna pair, wherein one antenna is used for transmitting and a second antenna is used for receiving, or an antenna array, wherein each antenna element can be selected for transmitting and/or receiving. Alternatively, instead of the first antenna, there may be an antenna pair or an antenna array. In some examples, an antenna array is used and an antenna pair within the antenna array is selected, wherein one antenna of the antenna pair is used for transmitting and a second antenna of the antenna pair is used for receiving.

The object may be an aircraft, a spaceship, a drone, a UAV or any other suitable object for which measuring the RCS would be advantageous.

The first antenna allows for the transmission of radio signals towards the object for which the RCS is being measured and allows for the receipt of the returning signal echoes which have been reflected off of the said object. To ensure this, the antenna may be part of an antenna system comprising the first antenna, a transmitter unit and a receiver unit or a transceiver unit, connected to the antenna. The antenna may be an omnidirectional antenna. An omnidirectional antenna may allow for an easier setup of the arrangement as the orientation of the antenna would not need to be changed. Alternatively, the antenna may be a directional antenna. A directional antenna may allow for a more accurate measuring of the RCS as there is less interference from unneeded sources and higher energy illuminating the object. The first antenna may be moveable and steerable to allow for two dimensional frequency scans at various points along both the azimuth and elevation. Alternatively, several antennas, one or more antenna pairs or an antenna array may be used at different positions along the azimuth and/or elevation in order to reduce and/or avoid moving the antennas but switch between them instead. This may reduce the acquisition time of the system.

The computation of the downrange profiles of the observations may allow for the processor to convert the observations into a suitable format. This may also allow for abnormal observations to be repeated if there was a fault with the acquisition of the observations or if, for example, an animal flew between the antenna and the object during the acquisition. Additionally or alternatively, this may also allow for abnormal observations to be corrected by, for example, equalization or any other suitable method, or partially or completely discarded. The threshold for deciding when an observation is abnormal may be predetermined by the processor and/or memory and/or may dynamically change based on the object being observed.

The computation of the three dimensional ISAR images may allow for the processor to build a high quality computerized radar image of the object. This may also allow for a user that views these images to understand the scattering phenomena taking place in the object, but also to identify abnormal observations, unexpected/undesirable couplings in the acquisition system or systematic errors which may be compensated by acting on the downrange profiles which in turn may lead to an improved radar image.

The extraction of the scattering centers of the object may allow for a user to corroborate the extracted scattering centers with the expected scattering centers. If the computed and expected scattering centers are greatly different, the user may instruct the processor to redo the method. The processor may redo the method automatically. The expected scattering centers may be used to guide the extraction of the scattering centers. This may result in an improved output of the RCS measurement.

The computation of the RCS of the object may allow for a user to see what the object would look like on, for example, a RADAR screen. The user may then use these results to alter the design of the object in order to reduce the RCS and/or change the RCS distribution.

In some embodiments, the arrangement comprises a vector network analyzer, VNA, configured to act as a radar. The VNA may allow for the arrangement to transmit and measure the strength of the signals received by the antenna, antenna pair or antenna array. The VNA may measure both the amplitude and phase properties of the received signals. This may allow for a more accurate measurement of the received signals and give a more accurate radar imaging of the object. The outputs of the VNA may be output to a processor, a memory, to a computer via wired and/or wireless connection or to any other suitable device or component.

In some embodiments, the arrangement comprises a hardware gating equipment, HGE, configured to minimize noise, clutter, a number of frequency samples required by the arrangement to measure the RCS of the object. The HGE may also be configured to minimize any other suitable parameter. The inputs and outputs to the HGE may be the same as the outputs and inputs, respectively, of the VNA or any other transmission and/or reception equipment. The HGE may comprise one or more of a processor, a memory, a transceiver or any other suitable component, which allows for the minimization of noise, clutter and the number of frequency samples. The minimization of these parameters may allow for a higher quality radar image thereby leading to an accurate RCS measurement, and a reduction of acquisition time.

In some embodiments, the arrangement comprises a carrier, wherein the carrier comprises a motor configured to move the carrier, and wherein the first antenna is located on the carrier. The carrier may be a wagon, a vehicle or any other suitable type of carrier on which the first antenna can be located. The carrier may also have the VNA and the HGE located on it. The motor may be electric, hybrid, petrol, diesel or any other type of engine which provides propulsion.

In some embodiments, the arrangement further comprises a calibration target, TC, located on a known position along a first axis between the object and the carrier and displaced in a first lateral direction along a second axis in relation to the object, wherein the first and the second axis are orthogonal to each other. Alternatively, the TC may be located on a position of the first axis which is not between the object and the carrier and displaced in a lateral direction along the second axis in relation to the object.. The first axis may be parallel to an imaginary axis, wherein the imaginary axis is a straight line directly connecting the object and the carrier. This in turn may mean that the TC is not directly between the object and the carrier. In some examples, the first axis is not parallel to the imaginary axis. Alternatively, the second axis may not be orthogonal to the first axis but merely not parallel to the first axis. In some particularly preferred embodiments, the positioning of the TC is determined in such a way to avoid shadowing of the object. The RCS of the TC may be known before the measurement of the RCS of the object. This may allow for the arrangement to be calibrated directly with the information contained in and extracted from the observations. This avoids additional steps and time in the process to get the information for calibration. This may lead to a more accurate calibration, since calibration and measurement data is acquired simultaneously. This may lead to a more accurate RCS results.

The distance from the TC to the first antenna can be estimated from the observations, in the downrange profiles. This may allow for an estimation of mechanical deviations produced during the movement of the carrier in the axis orthogonal to the two dimensional scanning path performed by the carrier or in any other direction of interest to be calculated and for these deviations to be corrected by postprocessing. This may also result in improved measurements and therefore, higher quality radar imaging and a more accurate RCS measurement. There may be more than one TC. This in turn may improve the accuracy of the estimation of mechanical deviations. Alternatively, the distance may be measured by an external device. The external device may be an optical tracker, a laser tracker, or any other suitable type of device.

In some embodiments, the arrangement further comprises a lateral target, TL, located in a known position that is not illuminated by the antennas that illuminate the object. The TL is preferably located along an axis which is parallel to the movement of the carrier. A second antenna may be mounted on the carrier configured to transmit radio signals towards the TL and to receive radio signals reflected off of the TL. In some embodiments, the second antenna may be an antenna pair, one used for transmitting another for receiving, or an antenna array, which each antenna element could be selected for transmitting and/or receiving. The TL and the second antenna may allow for the arrangement to measure, as the carrier is moved, intended movements of the carrier, such as sizes of lateral steps, or any other unintended movements, such as mechanical deviations. This may also allow the transient response of the HGE to be measured. This information may be used for correction purposes in the postprocessing. The second antenna may be constructed in substantially the same way as the first antenna that illuminates the object. The second antenna may be an omnidirectional antenna or a directional antenna. The second antennas may be positioned substantially orthogonally to the positioning of the first antenna. This may allow an enhanced accuracy of the estimation of the mechanical movements. The second antenna may be coupled to the same VNA and HGE as the first antenna using switches. There may be more than one second antenna with a different orientation than the secondary second antenna. In some embodiments, a secondary second antenna is positioned 180° in relation to the primary second antenna. There may be any number of second antennas. The secondary second antenna may transmit and receive radio signals to and from a TL different from the TL of the primary second antenna. The same second antenna may illuminate more than one TL. This in turn may improve the estimation of the movements. This in turn may improve the estimation of the transient response of the HGE. The TL may be a flat plate, a cube, a sphere or any other object of a suitable shape and material which allows for the lateral movement of the carrier to be measured.

In some embodiments, the carrier is configured to move on a rail. This may allow for a reduction in the movement of the apparatus in the wagon in the direction of the object and/or the TC. This may allow for a more accurate measurement of the RCS of the object as there are fewer mechanical deviations. The carrier may comprise one or more wheels which are configured to slot into the rail or move along the rail. This may result in a reduction of the movement of the carrier in the direction of the object. The carrier may alternatively be configured to move on a road or any other suitable surface which reduces the mechanical deviations. The carrier may alternatively use MAGLEV or any other suitable method of movement.

In some embodiments, the first antenna may be an antenna array arranged in a vertical direction. This may allow for the filtering out of the ground effects in postprocessing leading to a more accurate RCS measurement. The second antenna may also be a vertical antenna array for filtering the ground effects, which in turn may lead to a better estimation of the distances and transient response of the HGE.

In some embodiments, the arrangement may be located outdoors. This may allow for the RCS of very large objects to be measured. In some embodiments, the arrangement may be located indoors and other effects like the wall, floor or ceiling reflections may be filtered out in postprocessing.

According to a third aspect, we describe a system for measuring a Radar Cross Section, RCS, of an object. The system comprises the described arrangement using the described method. In particular, the method may take place in a dedicated processing unit. Alternatively, the method can take place in any suitable location.

It is clear to a person skilled in the art that the statements set forth herein may be implemented under use of hardware circuits, software means, or a combination thereof. The software means can be related to programmed microprocessors or a general computer, an ASIC (Application Specific Integrated Circuit) and/or DSPs (Digital Signal Processors). For example, the processing unit may be implemented at least partially as a computer, a logical circuit, an FPGA (Field Programmable Gate Array), a processor (for example, a microprocessor, microcontroller (µC) or an array processor)/a core/a CPU (Central Processing Unit), an FPU (Floating Point Unit), NPU (Numeric Processing Unit), an ALU (Arithmetic Logical Unit), a Coprocessor (further microprocessor for supporting a main processor (CPU)), a GPGPU (General Purpose Computation on Graphics Processing Unit), a multi-core processor (for parallel computing, such as simultaneously performing arithmetic operations on multiple main processor(s) and/or graphical processor(s)) or a DSP.

It is further clear to the person skilled in the art that even if the herein-described details will be described in terms of a method, these details may also be implemented or realized in a suitable device, a computer processor or a memory connected to a processor, wherein the memory can be provided with one or more programs that perform the method, when executed by the processor. Therefore, methods like swapping and paging can be deployed.

Even if some of the aspects described above have been described in reference to the arrangement, these aspects may also apply to the method and vice versa.

### Brief description of the drawings

These and other aspects of the invention will now be further described, by way of example only, with reference to the accompanying figures, wherein like reference numerals refer to like parts, and in which:
- Figure 1: shows a schematic diagram of the carrier and the components on and around the carrier according to an embodiment described herein;
- Figure 2: shows a schematic diagram of an object and a calibration target according to an embodiment as described herein;
- Figure 3: shows a perspective view of the arrangement according to an embodiment as described herein; and
- Figure 4: shows a block diagram of a method of measuring the Radar Cross Section (RCS) of an object according to an embodiment as described herein.

### Detailed description of the preferred embodiments

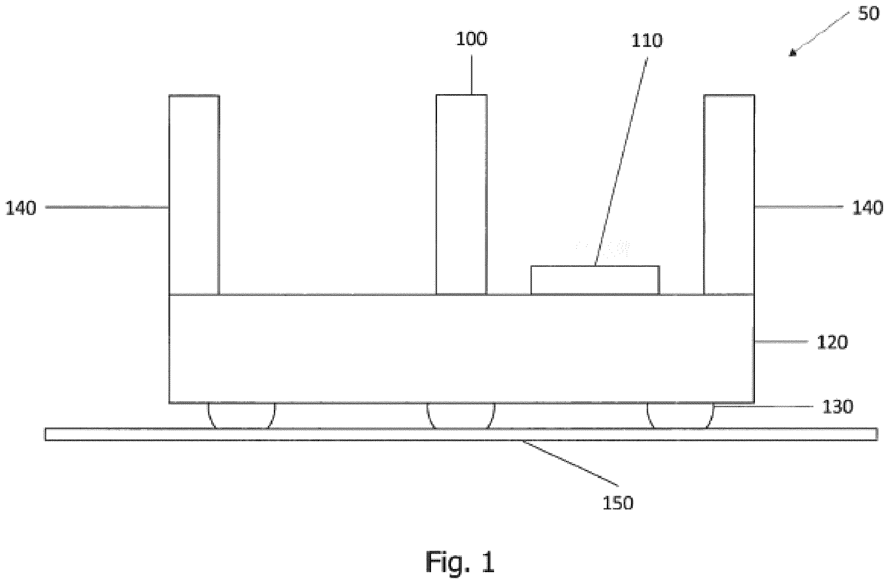

Figure 1 shows a schematic diagram of the carrier and the components on and around the carrier according to an embodiment described herein.

In this example, the carrier assembly 50 comprises a first antenna 100, a housing 110 comprising the VNA and the HGE, the carrier 120 containing a motor, a plurality of wheels 130, two second antennas 140 and a rail 150. The first antenna 100 may alternatively be an antenna pair or an antenna array.

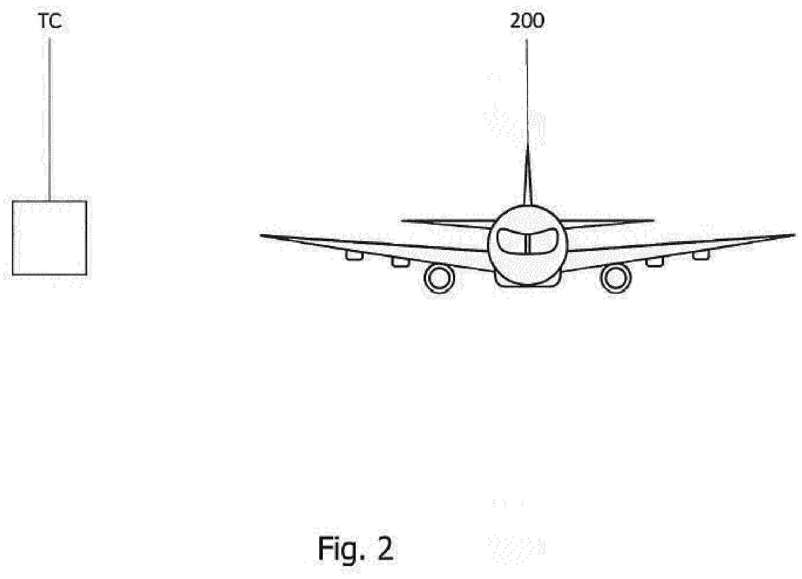

The first antenna 100 is a vertical array antenna which will be described in more detail below. The vertical array antenna allows for diversity to filter out the ground plane effects in the postprocessing which will also be described in more detail below. The first antenna 100 comprises a transmission unit and a receiving unit which transmits signals towards the object (see figure 2) for which the RCS is being measured and a receiving unit which receives the signals reflected from the object. Alternatively, these units can be combined into a single transceiver unit. The carrier assembly 50 also comprises a power supply for powering the transmission unit. The power supply may alternatively be contained in the housing 110 and/or be coupled to the first antenna 100. The transmission unit and/or receiver unit and/or transceiver unit may comprise a processor and a memory to control the units and to store preset parameters and/or store results. Each of these units may also communicate with an external device at a remote location where the external device can be used to control each of these units. The first antenna 100 scans one or both dimensions of the two dimensional near field frequency scan at one location before being moved to a second location. In some examples, the first antenna 100 scans one dimension of the two dimensional near field frequency scan and is then moved laterally by the motor of the carrier assembly 50 where the first antenna 100 then scans the second dimension of the two dimensional near field frequency scan.

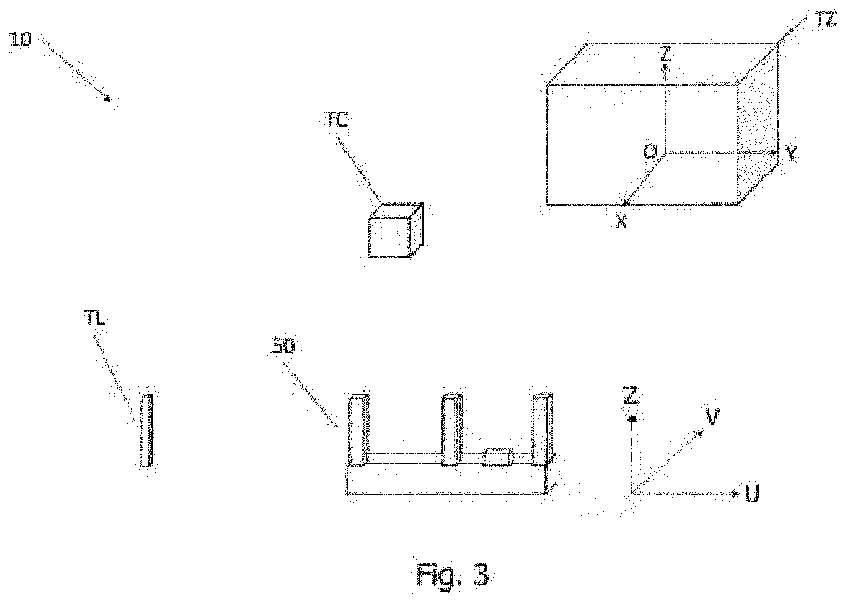

The housing 110, which encloses the VNA, the HGE, a switching matrix and the processing unit, is made of a weatherproof material which protects these components from external factors. Alternatively, the processing unit may be at an external location not shown. The housing 110 may also be made of a material which allows for the transmission and receipt of radio signals in relation to the components within the housing 110. A VNA is known in the prior art as an instrument which measures the network parameters of electrical networks. The VNA preferably generates the signal transmitted by the first antenna 100. The VNA receives the signals received by the first antenna 100 which have been converted into electrical signals. The VNA comprises a signal generator, a test set, a receiver and a processor. The VNA then outputs these signals to the processing unit via a wired and/or a wireless connection. The HGE is configured to, inter alia, minimize noise, clutter and a number of frequency samples required by the arrangement (see figure 3) to measure the RCS of the object. The HGE is connected between the VNA and the first antenna 100. The HGE shuts the receiving channel to the VNA when energy scattered from the object is not received by the first antenna 100. The HGE shuts the transmitting channel to the first antenna 100 to generate the transmitted pulse, being shut when the receiving channel is open. The switching matrix is configured to select an antenna for the transmission and an antenna for the receipt of the radio signals. It may be the same antenna. The switching matrix may be configured to receive signals from more than one antenna consecutively and/or simultaneously, obtaining, in the latter, more than one observation at the same time with multiple receivers The switching matrix may comprise power amplifiers for the transmission to illuminate the object with more energy. The switching matrix may comprise low noise amplifiers for the receipt of the radio signals with a reduced level of noise. The processing unit comprises a processor and a memory, wherein the processor is configured to compute the RCS of the object 200. The computation will be described in further detail below.

In some embodiments, there are multiple housings 110, wherein each housing 110 comprises only the VNA and/or only the HGE and/or the switching matrix and/or the processing unit and/or only certain components of each of these devices.

The carrier 120 is a simple carriage which is configured to carry the equipment of the carrier assembly 50. The carrier 120 can be any sort of device and can be any shape which is suitable for carrying the equipment of the carrier assembly 50.

In this example, the carrier 120 comprises three wheel sets 130 however; the number of wheels and wheel sets can be altered depending on the dimensions of the carrier 120 and the weight of the carrier assembly 50. The wheel sets 130 are configured to run on rails 150. The number of rails 150 can also be altered depending on the dimensions of the carrier 120 and the weight of the carrier assembly 50. The motor propels the carrier assembly 50 along the rail 150 via a drive train as is well known in the field of vehicles.

In this example, the carrier assembly 50 further comprises two second antennas 140 which are installed on the carrier 120 to measure echoes produced by lateral targets (see figure 3), located in the lateral direction i.e. the direction of motion of the carrier assembly 50. The lateral targets and the two second antennas 140 are configured to electrically measure the sizes of the lateral steps of movement of the carrier assembly between scans of the object by the first antenna 110, and to measure the hardware gating transient response. This information is used for correction purposes in the postprocessing. This information is also used in order to create a three dimensional ISAR image of the object 200. This process is described below.

Figure 2 shows a schematic diagram of an object and a calibration target according to an embodiment as described herein.

The object 200 in this example is an aircraft however, the object 200 may be any object 200 for which the RCS can be measured.

The calibration target TC is an object for which the RCS is already known. This then allows for the VNA and/or HGE and/or the processing unit to be able to calibrate themselves before and/or after measuring the RCS of the object 200. This calibration target TC can be of any shape or size and can be made of any material. In this example, the view as if the user was located at the carrier assembly 50. In this example, the object 200 is head on to the carrier assembly 50 however, the object 200 may be in any orientation in relation to the carrier assembly 50.

Figure 3 shows a perspective view of the arrangement according to an embodiment as described herein

The measurement arrangement 10 locates the object 200 simply on the ground in a volume referred as to target zone TZ. The carrier assembly 50 carrying the equipment needed to measure the RCS of the object 200 is located at a near field distance from TZ. Preferably, the near field distance is a ratio of 1:5, that is to say, if the object 200 has a dimension of 20 meters, the carrier 120 is located 100 meters away. However, any suitable ratio may be used. In this example, the object 200 is located within the target zone TZ and even though it is not shown, it is orientated according to the direction in which the RCS is intended to be measured in relation to the carrier assembly 50. The acquisition system, which comprises the equipment on the carrier 120 as described above, is based on a vertical antenna array which provides diversity to filter out the ground effects by postprocessing. The motor within the carrier 120 to moves the carrier assembly 50 in a lateral direction i.e. along the U axis, in order to perform the azimuth scan and acquire the RCS of the object 200. In this example, the carrier assembly 50 is not on a rail 150 but is free standing. The carrier assembly 50 may be moved in a predetermined manner according to a computer program coupled to the motor or via self-driving technology. Any other suitable method can also be used.

The calibration target TC is located in front of the target zone TZ i.e. along the X axis, and laterally displaced in relation to the target zone TZ i.e. along the Y axis, to avoid shadowing of the object 200 within the target zone TZ. The echoes produced by the calibration target TC may be used for two purposes: calibration of the system, and estimation of mechanical deviations to be corrected by postprocessing. The first antenna 100 located on the carrier 120 receives these reflected radio signal echoes.

The 2-D-lateral scan RCS measurement arrangement 10 is, in this example, an outdoors range designed with the purpose of measuring RCS of full-scale target objects 200 located on the ground. The objective is to measure the RCS of an object 200 without the need to lift it from the ground or locate it inside an indoor chamber. This approach drastically reduces the cost of a measuring campaign.

The measurement of the RCS of the object 200 is performed by near-field NF scans of the object on a 2-D-plane synthetic aperture SA. The synthetic aperture SA is in the vertical direction i.e. Z-axis and in the lateral direction i.e. the U-axis. The vertical scanning across the synthetic aperture SA is carried out, preferably, through switching between the different antenna elements part of the first antenna 100. The lateral scanning across the synthetic aperture SA is carried out through the displacement to adjustable steps of the first 100 and second 140 antennas located on the carrier assembly 50. The first antenna 100 is pointed toward the origin O which is preferably set to be the center point of the object 200. One lateral scan covers a limited equivalent azimuth range. The complete azimuth range can be covered by the first antenna 100 performing several scans with different object 200 orientations. The object can be, preferably, rotated. The object can be, preferably, mounted on a turntable to be easily rotated, or alternatively it could be rotated manually or using its own wheels or any other method. Alternatively, the assembly 50 could be moved to another location to look at the object from another orientation. The different azimuth orientations within one single scan are achieved by moving the carrier assembly 50 along the U-axis. At predetermined positions along this axis, the first antenna 100 performs the required observations across the vertical direction of the object 200. Alternatively, the observations could be taken continuously when the carrier assembly 50 is moving, i.e. at constant speed. These observations are then used in a method to compute the RCS of the object 200 which is described in further detail below. Alternatively, the carrier assembly 50 may be moved in a non-linear path around the object 200. This non-linear path may be a circular path around the object 200 or any other suitable non-linear path.

For the vertical scanning of the object 200, the receiving antenna element RXA and transmitting antenna element TXA of the first antenna 100 are switched accordingly. In some examples, there are elements that only transmit or only receive. In some examples, there are elements where, in some cases, the elements are transmitting and in other cases, they are receiving i.e. the element alternates between transmitting and receiving. In some examples, the elements can transmit and receive simultaneously. This is performed by the switching matrix. In case a finer sampling than the one provided by the physical separation of the elements of the first antenna 100 is required, multiple scans can be performed at different heights. The system, therefore, can be configured according to the Target Zone TZ size, since larger objects 200 require finer samplings to avoid aliasing. At least one element of the first antenna 100 is transmitting and at least one other element of the first antenna 100 is receiving simultaneously. In case of multiple elements that are receiving simultaneously with different receivers, several observations are taken in parallel. This reduces the scanning time. In some examples, there are a plurality of first antennas 100. There could be several first antennas 100 mounting on the same carrier assembly 50. In this case, several frequency bands could be acquired in parallel.

The lateral and vertical steps are, hereafter, referred to as U and Z channels respectively in accordance with the axes shown in figure 3. The combination of a Z channel and a U channel identifies a position where a frequency sweep of S₂₁ parameter is registered in the Vector Network Analyser VNA, with channel 1 connected to a TXA and channel 2 to an RXA. The S₂₁ parameter is a scattering parameter which is well known to the skilled person. A multiport VNA can be used, which contains multiple receivers. Each receiver can be connected to different RXA. In this case, other S parameters such as S₃₁ or S₄₁ are also registered.

Nu*Nz (number of lateral steps (Nu), number of vertical steps (Nz)) functions are referred to as the down-range DR measured profiles. The Nu*Nz function preferably results in a quasi-Fourier Transform of the frequency scan S₂₁. This results in a calculation for each frequency scan position which are then transformed into their respective DR profiles. In between the VNA, and the RXA and TXA, a hardware-gating equipment HGE is connected. The HGE shuts the channel 2 of the VNA when energy scattered from the object is not received. The HGE shuts the channel 1 of the VNA to generate the transmitted pulse, being shut when the receiving channel is open.

Figure 3 shows the calibration target TC located in front of the target zone TZ, and is laterally displaced to said target zone TZ in order to avoid any first-order interference, otherwise known as shadowing, with the object 200. The location of the calibration target TC is an input in the postprocessing process and fixes the origin O of the target zone TZ. The echoes produced by the calibration target TC are used for two purposes: calibration of the Z channels, which comprise the complete radiofrequency chains and all of the radiofrequency chains of the specific U channel that is used for this calibration, and the estimation of mechanical deviations of the hardware in the direction of the V-axis. The latter calibration is used for the correction of those deviations during the postprocessing.

The size of the lateral steps are electrically measured using the two second antennas 140 positioned on the carrier 120 and are pointed to the lateral targets TL located in the lateral direction i.e. the U-axis. Therefore, an additional frequency sweep is taken each lateral step using these second antennas 140. By identifying the echoes produced by the lateral targets TL, the size of the lateral steps between sweeps performed by the first antenna 100 can be measured, as well as the transient of the hardware gating equipment. This information is used for correction purposes in the postprocessing and also to compute the downrange profiles and the three dimensional ISAR images.

Through postprocessing of the data obtained from the first 100 and second 140 antennas and measured by the VNA and/or transferred to the processing unit, 3-D-ISAR images of the object 200 are computed. The vertical resolution of the first antenna 100, which is related to its size, defines the arrangement's 10 capability to suppress the ground plane effects. Therefore, larger vertical apertures improve the antenna performance and give a more accurate RCS result but also increase the number of samples, requiring more antennas, testing time, and hardware complexity.

Scattering centers SCs are extracted from the NF 3-D-ISAR Images, which are used to compute the RCS of the object 200.

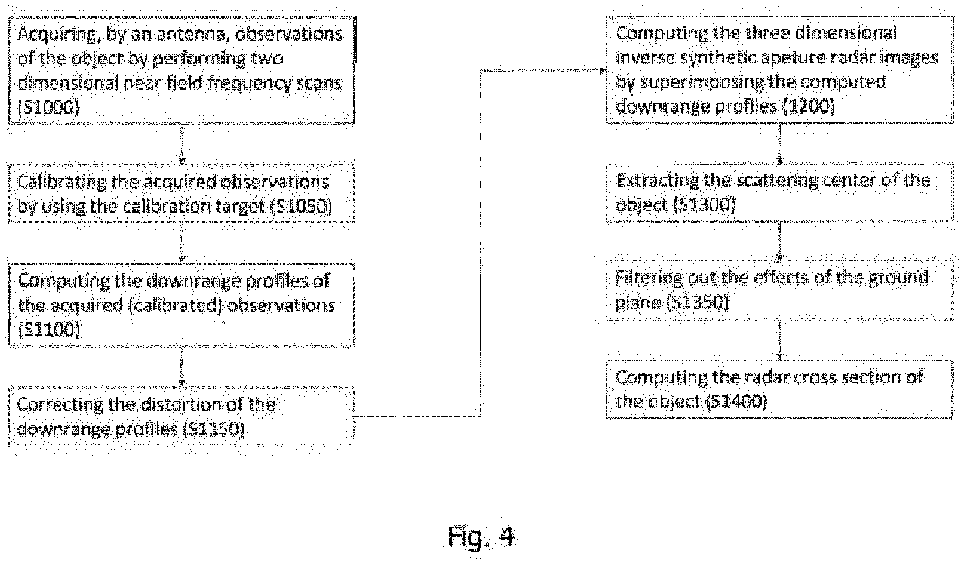

Different scattering mechanisms can also be identified in the SC representation of the object 200. The RCS of the object 200 can be computed considering different spatial zones, which enables to filter out the effects of the ground plane or to evaluate the RCS contribution of a part, area, zone or specific feature of the object. The complete postprocessing scheme in described below in relation to figure 4.

Figure 4 shows a block diagram of a method of measuring the Radar Cross Section, RCS, of an object according to an embodiment as described herein.

The measurement method is based on the following five main steps:
(i) acquisition (S1000) of the observations by performing two dimensional (vertical-lateral) near field frequency scans;
(ii) computation (S1100) of the downrange profiles;
(iii) computation (S1200) of 3-D Inverse Synthetic Aperture Radar, ISAR, images by superimposing the downrange profiles;
(iv) extraction (S1300) of the scattering centers; and
(v) computation (S1400) of the RCS.

This method is carried out in the VNA and/or the HGE of the arrangement 10. The method may alternatively be carried out in a separate dedicated processing device in the arrangement 10. The separate dedicated processing device may be located on and/or in the carrier 120 and coupled to the VNA and/or the HGE and/or the first antenna 100 and/or the second antenna 140 via a wired and/or a wireless connection. Alternatively, the separate dedicated processing device may be located in an external location not associated with the carrier 120.

The two dimensional lateral scans are performed by the first antenna 100 in the carrier assembly 50. The scans are performed by the first antenna 100 making one scan and then the carrier assembly 50 being moved along the rail 150, in the U axis, to a second predetermined position where the first antenna 100 makes a second scan. This process repeats until the entire object 200 within the target zone TZ has been scanned. Alternatively, the observations could be taken continuously when the carrier assembly 50 is moving, i.e. at constant speed. The number of scans may be predetermined by, for example, a processor coupled to the motor of the carrier 120 and/or the carrier assembly 50 may comprise a unit which determines when the object 200 has been completely scanned by monitoring signals received by the first antenna 100, and/or the device by following a sampling criteria. Furthermore, in order to aid the subsequent steps of the method, the second antennas 140 also receive signals echoes from the lateral targets TL. These lateral target measurements allow the processor to process how far apart each scan has been and thereby compute a downrange profile for each scan and resultantly, a three dimensional ISAR image.

These observations are then passed to a processor and used to compute S1100 the downrange profiles. These downrange profiles are preferably determined by the processing device after receiving signals from the VNA. The VNA is able to measure both the amplitude and phase of the received signals and is therefore able to pass these signals to the processing device which can accurately compute the downrange profiles. The downrange profiles are computed by using a Fast Fourier Transform, FFT. This may allow for a more efficient processor as FFT is a particularly efficient method of calculation. It may also allow for a faster method thereby increasing the speed of RCS computation and/or the number of objects that the RCS can be computed for in a set period of time. The use of a FFT in computing is well known to the skilled person.

The profiles are then superimposed upon each other in order to compute S1200 a three dimensional ISAR image for the object 200 within the target zone TZ. This allows for an accurate three dimensional radar image of the object 200. The application of three dimensional ISAR imaging is known to the skilled person.

This three dimensional image is then used to extract S1300 the scattering center of the object 200. Knowing the position of the scattering center is important to the method as only by knowing the position of the scattering center is it possible to compute the RCS of the object.

The scattering center is then used to compute S1400 the RCS of the object 200 in the target zone TZ. After the RCS has been computed, the user is then able to see how the object 200 would be identified on, for example, a RADAR system. The scattering center of the object is extracted by a CLEAN algorithm. The use of the CLEAN algorithm may allow for a more efficient processor due to the characteristics of the algorithm by, for example, parallelization. It may also allow for a faster computation of the scattering center thereby increasing the speed of the method and the RCS computation and/or the number of objects that the RCS can be computed for in a set period of time.

There are also three optional steps within the method which improve the accuracy of the RCS measurement of the object 200.

After the observations of the object 200 have been acquired S1000, the observations are calibrated S1050 by the processor. Preferably, the calibration S1050 uses an echo received from a calibration target TC, by the first antenna 100, located between the object 200 and the carrier 120, and wherein the calibration target TC is displaced in a lateral direction in relation to the object 200. This calibration allows for a more accurate RCS result as has been described above in relation to figure 3. The information for the calibration is, therefore, taken at the same time that the measurement itself. The information for the calibration is embedded in the measurement data. This may allow for a more accurate calibration. This may also allow for a simpler and faster complete process.

After computing S1100 the downrange profiles, the distortion of the downrange profiles are corrected S1150 by the processor, wherein the correction S1150 comprises correcting the distortion from the antenna pattern and/or the transient of a hardware gating equipment HGE and/or mechanical deviations. This correction may lead to a more accurate RCS measurement as various external factors have been removed. The method of removing these distortional factors are known to the skilled person.

After the extraction S1300 of the scattering center of the object, the effects of the ground plane are filtered out S1350 by the processor. The vertical array first antenna 100 allows for diversity to filter out the ground plane effects. This is done by suppressing the contributions produced and/or located on the ground plane. This results in an improved RCS measurement.

The technique described herein is an outdoors facility, designed to measured targets located on the ground. The technique described herein may measure in a static configuration, prioritizing the accuracy of the results. The technique described herein may use an antenna, preferably an antenna array, performing a lateral scan to generate the synthetic aperture. The technique described herein may use the lateral scan capability to scan the target in the azimuth direction. The technique described herein may use a near-to-far field transformation technique to electronically measure the target close to target.

No doubt many other effective alternatives will occur to the skilled person. It will be understood that the invention is not limited to the described embodiments and encompasses modifications apparent to those skilled in the art and lying within the scope of the claims appended hereto.

## Claims

1. A method for measuring a Radar Cross Section, RCS, of an object (200), wherein the method comprises:
acquiring (S1000), by a first antenna (100), observations of the object (200) by performing two dimensional near field frequency scans;
computing (S1100), by a processor, the downrange profiles of the acquired observations;
computing (S1200), by the processor, the three dimensional Inverse Synthetic Aperture Radar, ISAR, images by superimposing the downrange profiles;
extracting (S1300), by the processor, the scattering center of the object (200); and
computing (S1400), by the processor, the RCS of the object (200).

2. The method according to claim 1, wherein after acquiring (S1000) the observations of the object (200), the observations are calibrated (S1050) by the processor.

3. The method according to claim 2, wherein the calibration (S1050) uses an echo received from a calibration target, TC, located in a known position on a first axis parallel to an imaginary axis, wherein the imaginary axis lies in a straight line between the object (200) and a carrier (120), and wherein the TC is displaced in a lateral direction along a second axis in relation to the object (200), wherein the first axis and the second axis are not parallel to each other.

4. The method according to any of claims 1 to 3, wherein after computing (S1100) the downrange profiles, the distortion of the downrange profiles are corrected (S1150) by the processor, wherein the correction (S1150) comprising correcting the distortion from the antenna pattern and/or the transient of a hardware gating equipment, HGE, and/or mechanical deviations.

5. The method according to any of claims 1 to 4, wherein after the extraction (S1300) of the scattering center of the object (200), the effects of the ground plane are filtered out (S1350) by the processor.

6. The method according to any of claims 1 to 5, wherein the downrange profiles are computed (S1100) by using a Fast Fourier Transform, FFT.

7. The method according to any of claims 1 to 6, wherein the scattering center of the object (200) is extracted (S1300) by a CLEAN algorithm.

8. A Radar Cross Section, RCS, measuring arrangement (10) for measuring the RCS of an object (200), wherein the arrangement (10) comprises:
a first antenna (100) configured to acquire observations of the object (200) by performing two dimensional near field frequency scans; and
a processing unit comprising a processor, wherein the processor is configured to:
compute downrange profiles of the acquired observations;
compute a three dimensional Inverse Synthetic Aperture Radar, ISAR, image by superimposing the downrange profiles;
extract a scattering center of the object (200); and
compute the RCS of the object (200).

9. The arrangement (10) according to claim 8, further comprising a vector network analyzer, VNA, configured to act as a radar.

10. The arrangement (10) according to claim 8 or 9, further comprising a hardware gating equipment, HGE, configured to minimize noise, clutter and a number of frequency samples required by the arrangement (10) to measure the RCS of the object (200).

11. The arrangement (10) according to any of claims 8 to 10, further comprising a carrier (120), wherein the carrier (120) comprises a motor configured to move the carrier (120), and wherein the first antenna (100), is located on the carrier (120).

12. The arrangement (10) according to any of claims 8 to 11, further comprising a calibration target, TC, located in a known position on a first axis parallel to an imaginary axis, wherein the imaginary axis lies in a straight line between the object (200) and the carrier (120), and displaced in a first lateral direction along a second axis in relation to the object (200), wherein the first and the second axis are not parallel to each other.

13. The arrangement (10) according to claim 12, wherein the positioning of the TC is configured to avoid the TC shadowing the object (200).

14. The arrangement (10) according to any of claims 8 to 13, further comprising a lateral target, TL, displaced in a second lateral direction along a third axis in relation to the carrier (120) and a second antenna (140) configured to transmit radio signals towards the TL and to receive radio signals reflected off of the TL, wherein the first axis and the third axis are parallel to each other.

15. The arrangement (10) according to any of claims 8 to 14, wherein the first antenna (100) is a vertical antenna array.
